# EUROPÄISCHE PATENTSCHRIFT

(11) **EP 2 583 007 B1**
(45) Veröffentlichungstag und Bekanntmachung des Hinweises auf die Patenterteilung: **01.10.2014**
(21) Anmeldenummer: 11705200.1
(22) Anmeldetag: 21.02.2011
(51) Int. Cl.: F16J 15/06, B01D 29/03

(54) **STATISCHE DICHTUNG MIT INTEGRIERTEM SIEB- ODER FILTERELEMENT**
STATIC SEAL WITH INTEGRATED SCREEN OR FILTER ELEMENT
JOINT D'ÉTANCHÉITÉ STATIQUE AVEC ÉLÉMENT INTÉGRÉ DE TAMISAGE OU DE FILTRATION

(30) Priorität: 15.06.2010 DE 102010030072
(43) Veröffentlichungstag der Anmeldung: 24.04.2013
(73) Patentinhaber: Federal-Mogul Sealing Systems GmbH, 57562 Herdorf (DE); Lamouche, Stephane, 69330 Meyzieu (FR)
(72) Erfinder: SZELE, Erika, H-3530 Miskolc (HU); BUCHEN, Dietmar, 50823 Köln (DE); LAMOUCHE, Stephane, 69330 Meyzieu (FR)
(74) Vertreter: Becker Kurig Straus
(86) Internationale Anmeldenummer: PCT/EP2011/052514
(87) Internationale Veröffentlichungsnummer: WO 2011/157456

(56) Entgegenhaltungen:
- EP-A1- 1 927 798
- DE-A1- 10 055 402
- DE-U1-202010 006 768

## Beschreibung

Die vorliegende Erfindung betrifft eine statische Dichtung, die insbesondere zur Verwendung im Automobilbereich bestimmt ist und dazu dient, eine Abdichtung zwischen zwei Motorkomponenten, zum Beispiel eines Ölbehälters, eines Zylinderkopfes, einer Ölpumpe, oder einer Wasserpumpe, herzustellen oder auch, um die Abdichtung im Bereich eines Verteilergehäuses herzustellen oder um eine Dichtung für den Ansaugkrümmer zu bilden.

Es gibt verschiedene Arten statischer Dichtungen.

Ein erster Typ von Dichtungen besteht nur aus Elastomer. Eine derartige Dichtung kann preisgünstig hergestellt werden und besitzt im Allgemeinen gute Dämpfungseigenschaften. Eine derartige Dichtung ist jedoch nicht starr, was die Montage und insbesondere eine automatisierte Montage erheblich erschwert. Bei derartigen Dichtungen besteht zudem die Gefahr, dass die Dichtung bei der Montage der abzudichtenden Teile zerstört wird.

Eine andere Art von Dichtungen basiert auf einer Silikonpaste, die direkt auf eine abzudichtende Fläche aufgebracht wird. Diese Dichtung kann von einem Roboter aufgebracht werden. Auch diese Dichtung ist preisgünstig, wird jedoch bei jeder Demontage zerstört.

Eine andere Dichtung umfasst einen Kartonträger, der mit Fasern und oder Elastomer verstärkt ist.

Eine andere Art von Dichtungen sind Metalldichtungen. Dabei handelt sich um ein Metallblech, etwa aus rostfreiem Stahl, das mindestens eine durchgehende Rippe als Dichtbereich aufweist, um der Dichtung einen definierten Druck zu verleihen, mit dem ein Dichtbereich an eine Dichtfläche angepresst wird. Um das Metallblech zu schützen und die Dichteigenschaften zu verbessern, kann das Metallblech mit Elastomer beschichtet sein. Eine derartige Dichtung bietet vertretbare Herstellungskosten bei guten Dichtungseigenschaften.

Weitere gattungsgemäße Dichtungen sind aus den Patentschriften EP 1 023 549 und WO 2006/024735 bekannt.

Aus der US-A-4 625 979 ist eine Zylinderkopfdichtung bekannt, die einen Kern umfasst, der aus mehreren Schichten besteht, beispielsweise einer Metallschicht, die beidseitig mit faserartigen mit Schichten auf der Basis von Glasfasern oder Asbest versehen ist, welche durch ein Polymer gebunden sind. Es sind Öffnungen für den Durchgang von Flüssigkeiten vorgesehen, die von Dichtungswulsten aus Silikon umgeben sind, welche durch Siebdruck aufgebracht sind.

Aus der DE 44 02 399 ist eine Zylinderkopfdichtung mit einem Metallkern bekannt, auf dem Dichtungsteile aus Elastomer aufgebracht sind, wobei jedes Teil ein Netz von Punkten und Löchern in Pyramidenform umfasst. Beim Zusammenpressen und abhängig von der Stärke der Verpressung der Dichtung kann das im Bereich der Punkte befindliche Elastomer in die Löcher fließen Die DE 100 55 402 A1 offenbart eine:
Dichtung, umfassend: - mindestens eine Trägerlage mit mindestens einer Durchgangsöffnung; - mindestens ein Sieb ; wobei das mindestens eine Sieb in mindestens einer der Durchgangsöffnungen angeordnet ist; wobei das mindestens eine Sieb durch eine Verbindung aus Elastomermaterial mit der mindestens einen Trägerlage verbunden ist wobei die Verbindung aus Elastomermaterial verdickt ausgeführt ist und als Abdichtung der Durchgangsöffnung dient.
Die DE 100 55 402 A1 offenbart auch ein Verfahren zur Herstellung einer Dichtung, umfassend: - Bereitstellen mindestens einer Trägerlage mit mindestens einer Durchgangsöffnung; - Bereitstellen mindestens eines Siebs oder eines Filters; - Einbringen der mindestens einen Trägerlage und des mindestens einen Siebs oder Filters sowie der mindestens einen Elastomerschicht in eine beheizte Form, so dass die mindestens eine Elastomerschicht so in Form gebracht wird, dass sie das Sieb oder den Filter mit der Trägerlage verbindet; und - Heißvulkanisieren des Elastomers in der Form.
Die DE 100 55 402 A1 offenbart auch ein Verfahren zur Herstellung einer Dichtung, umfassend: - Bereitstellen mindestens einer Trägerlage mit mindestens einer Durchgangsöffnung; - Aufbringen einer Beschichtung aus Elastomer auf die mindestens eine Trägerlage; - Bereitstellen mindestens eines Siebs oder eines Filters; - Anordnen des mindestens einen Siebs oder eines Filters lageorientiert in mindestens einer Durchgangsöffnung der Trägerlage in einer Form; - Erzeugen einer Verbindung aus Elastomermaterial, die das mindestens eine Sieb / den mindestens einen Filter lageorientiert mit der mindestens einen Trägerlage verbindet.

Ziel der Erfindung ist es, ein Verfahren zur Herstellung einer statischen Dichtung sowie auch eine statische Dichtung bereitzustellen, die ein Sieb- oder Filterelement umfasst und die mit moderaten Herstellungskosten erzeugt werden kann, und die für zahlreiche Verwendungszwecke geeignet ist.

Gemäß einem ersten Aspekt der vorliegenden Erfindung wir eine Dichtung mit mindestens einer Trägerlage und mindestens einem Sieb oder Filter bereitgestellt. Die mindestens eine Trägerlage weist mindestens einer Durchgangsöffnung auf. Die Trägerlage weist zudem eine Beschichtung aus Elastomer auf. Mindestens ein Sieb bzw. Filter ist dabei in mindestens der einen Durchgangsöffnung angeordnet und durch eine Verbindung aus Elastomermaterial mit mindestens einer Trägerlage verbunden und wird lageorientiert in der Durchgangsöffnung gehalten.

Das Sieb bzw. der Filter ist nahe mindestens einer Trägerlage angeordnet. Das Sieb oder der Filter liegt dabei nahe neben einer Trägerlage, ist auf einer Trägerlage, diese berührend angeordnet, oder liegt in einer entsprechenden Ausnehmung einer Durchgangsöffnung der Trägerlage. Eine Elastomerschicht erstreckt sich mindestens auf einem Teil der Trägerlage und auf mindestens einem Teil des Siebs oder des Filters und bildet einer Verbindung zwischen diesen Bauteilen. Die Elastomerschicht kann heiß-vulkanisiert oder durch Spritzgießen hergestellt sein.

In einer Ausführungsform ist die Verbindung aus Elastomermaterial verdickt ausgeführt und dient als Abdichtungselement für die Durchgangsöffnung. In dieser Ausführungsform wird die Abdichtung der Bauteile, die durch die Durchgangsöffnung miteinander verbunden werden sollen, bereits durch das Elastomer erzielt, mit dem das Sieb bzw. der Filter in der Trägerlage fixiert ist. In dieser Ausführung dient die Beschichtung aus Elastomer der Trägerlage im Bereich dieser Durchgangsöffnung lediglich dazu, die Trägerlage gegen Korrosion zu schützen oder die Trägerlage an den entsprechenden abzudichtenden Bauteilen zu halten.

In einer weiteren Ausführungsform ist die verdickte Verbindung aus Elastomermaterial einstückig mit der Beschichtung aus Elastomer einer Trägerlage ausgeführt. Durch eine einstückige Ausführung kann die Dichtung in einem Prozess hergestellt werden, der lediglich einen elastomerverarbeitenden Arbeitsgang umfasst, was die Herstellungskosten senken kann. Zudem erfordert diese Ausführungsform nur die Bereitstellung eines einzigen Elastomermaterials, womit Lagerkosten gesenkt werden können.

In einer anderen Ausführungsform ist die Verbindung bzw. die verdickte Verbindung aus Elastomermaterial getrennt von der Beschichtung aus Elastomer der Trägerlage ausgeführt. Durch diesen Aufbau können die Eigenschaften dieser Komponenten besser gesteuert werden. Diese Ausführungsform gestattet es ebenfalls nicht zusammenhängende elastomerbeschichtete Bereiche vorzusehen, um Elastomermaterial einzusparen.

In einer weiteren Ausführungsform bestehen die Verbindung bzw. die verdickte Verbindung und die Beschichtung aus Elastomer der Trägerlage aus unterschiedlichen Werkstoffen. Diese Ausführungsform kann dazu dienen, die einzelnen Elemente jeweils aus einem Elastomer herzustellen, das den jeweiligen Anforderungen nach Haltbarkeit, Gewicht, Elastizität und/oder Materialbeständigkeit erfüllt. Damit ist es möglich kostspieliges Elastomer, das alle Anforderungen erfüllt nur in den Bereichen zu verwenden, in denen alle diese Anforderungen auch tatsächlich erfüllt werden müssen.

In einer anderen Ausführungsform der vorliegenden Dichtung weist das Elastomer der Beschichtung der Trägerlage eine Verdickung in Umfangsrichtung auf (die um die Durchgangsöffnung herum verläuft), die als eine Rippe oder ein Steg ausgeführt ist. Es ist ebenfalls vorgesehen, dass die Verbindung bzw. die verdickte Verbindung aus Elastomermaterial mit einer Rippe oder einem Steg ausgeführt ist. Durch zusätzliche Rippen oder Stege kann die Abdichtfunktion der Elastomerschicht der Trägerlage und/oder der Verbindung gesteuert werden. Der kontinuierliche Steg oder die kontinuierliche Rippe ist dabei so angeordnet, dass mindestens ein Sieb oder Filter von einem jeweiligen Steg oder einer jeweiligen Rippe umgeben ist. Der kontinuierliche Steg oder die kontinuierliche Rippe kann an bestimmten Bereichen der Dichtung vorhanden sein oder nicht. Es ist ebenfalls vorgesehen, mehrere parallele Rippen/Stege auf mindestens einer Trägerlage anzuordnen, um mehrere hintereinander geschaltete Dichtungsbarrieren zu schaffen.

In einer zusätzlichen Ausführungsform weist die Verdickung und/oder die Rippe bzw. der Steg in Umfangsrichtung unterschiedliche Höhen und/oder Breiten auf. Diese Ausführungsform dient dazu, eventuell Dichtspaltunterschiede- oder Abweichungen, vorhandene lokal unterschiedliche Verpressungen der Dichtung in Bezug auf den Dichtungsspalt durch eine entsprechend angepasste Höhe eines Steges oder einer Rippe zu kompensieren. Dies ist in insbesondere im Bereich der Verpressung d. h. im Bereich der Schrauben/Bolzen wichtig.

In einer weiteren Ausführungsform weist die Verdickung und/oder die Rippe bzw. der Steg eine Höhe auf, die im Bereich von 0,05 - 3 mm liegt.

In einer anderen Ausführungsform der Dichtung umfasst mindestens eine Trägerlage Stahl, kohlenstoffarmen Stahl, verzinktem kohlenstoffarmen Stahl, Edelstahl, Aluminium oder einen thermoplastischen oder duroplastischen Polymerwerkstoff. Vorzugsweise ist das Sieb bzw. der Filter ebenfalls aus Stahl, kohlenstoffarmem Stahl, verzinktem kohlenstoffarmen Stahl, Edelstahl, Aluminium oder einen thermoplastischen oder duroplastischen Polymerwerkstoff hergestellt.

Vorzugsweise ist eine Elastomerschicht / Elastomerbeschichtung nahe einem der Ränder mindestens einer Trägerlage gebildet, wobei diese Elastomerschicht dicker ausgeführt ist, als in der übrigen Dichtung, um eine seitliche Dichtigkeit zu erzeugen. Durch einen randseitigen Wulst kann verhindert werden, dass von außen Verunreinigungen in den Bereich des Dichtspalts vordringen können, der zu Korrosion im Bereich der Dichtflächen führen könnte. Ein derartiger Randwulst kann auch im Bereich von Innenrändern wie beispielsweise an Schrauben- oder Bolzenlöchern angeordnet sein.

In einer weiteren Ausführungsform der vorliegenden Erfindung ist jede Fläche oder jeder Bereich jeder Trägerlage und/oder jedes Siebs oder jedes Filters, die bzw. der mit einer Elastomerschicht bedeckt ist, mit mindestens einer Substanz versehen, die eine Haftung der Elastomerschicht auf der Trägerlage verbessert. Durch eine derartige Vorbehandlung kann die Haftung der Elastomerschicht auf der oder den Trägerlagen bzw. auf dem oder den Sieben bzw. auf dem oder den Filtern verbessert werden.

In einer Ausführungsform ist mindestens eine Trägerlage etwa 0,2 mm dick. Diese Dicke stellt für kleine statische Dichtungen, wie sie typischerweise im Automobilbereich auftreten, einen geeigneten Kompromiss dar um einerseits Material einzusparen und andererseits eine ausreichende Festigkeit der Dichtung zu gewährleisten.

In einer anderen Ausführungsform der statischen Dichtung weist mindestens eine Trägerlage, ein Sieb und/oder Filter Ausnehmungen auf, die einen Anschlag für das Zusammenpressen bilden und das Verankern der Trägerlage, des Siebs und/oder des Filters verbessern. Diese Ausnehmungen können bei der Herstellung der Dichtung dazu dienen, einen Anschlag für die Form bereitzustellen. Die Ausnehmungen können jedoch auch dazu dienen, jeweils die Trägerlage das Sieb bzw. den Filter in der Form auszurichten.

Das Elastomer kann zur Familie der Silikone gehören. Bei Verwendung der vorliegenden Erfindung kann eine statische Dichtung mit einem eingesetzten Filterelement in einem Arbeitsgang hergestellt werden, bei dem die Dichtungsteile aus Elastomer aus einem einzigen Material bestehen. Die Dicke der Dichtung kann lokal verändert werden, um einen Kontaktdruck zu gewährleisten, der an die eventuelle Deformierung der gegeneinander abzudichtenden Teile angepasst ist.

Gemäß einem weiteren Aspekt der vorliegenden Erfindung wird ein Verfahren zur Herstellung einer Dichtung, bereitgestellt. Das erfindungsgemäße Verfahren umfasst das Bereitstellen mindestens einer Trägerlage, die mindestens eine Durchgangöffnung aufweist, das Bereitstellen mindestens eines Siebs oder Filters. Das Sieb bzw. der Filter wird lageorientiert in der Durchgangsöffnung der Trägerlage angeordnet, und dann wird eine Verbindung aus Elastomermaterial erzeugt, die das Sieb /den Filter lageorientiert mit der Trägerlage verbindet.

Mindestens eine Trägerlage, und mindestens ein Sieb oder Filter werden zusammen so angeordnet, dass der Abstand zwischen einer Trägerlage, und mindestens einem Sieb bzw. mindestens einem Filter gering ist, bzw. so gering ist, dass der Abstand durch ein Elastomer überbrückt werden kann. Die Trägerlage und das Sieb oder der Filter können nacheinander oder zusammen in eine Form oder Schablone eingelegt werden.

Mit "in der Durchgangsöffnung der Trägerlage angeordnet" wird das Auflegen des Siebs oder Filters auf die Trägerlage, das Einlegen des Siebs oder des Filters in eine Öffnung in der Trägerlage verstanden, wobei ein direkter Kontakt zwischen der Trägerlage und dem jeweiligen Sieb bzw. dem jeweiligen Filter nicht notwendig ist.

In einer Ausführungsform der vorliegenden Erfindung wird die Verbindung aus Elastomermaterial, die das Sieb / den Filter lageorientiert mit der Trägerlage verbindet, durch Kaltaufbringen einer Elastomerschicht auf die Trägerlage und das Sieb bzw. den Filter und das Einbringen dieser Elemente in eine beheizte Form zum Heißvulkanisieren erzeugt. Dabei wird die mindestens eine Elastomerschicht, kalt auf mindestens einem Teil der Trägerlage und auf mindestens einem Teil des Siebs bzw. Filters aufgebracht, wobei sich mindestens ein Teil der Elastomerschicht auf der Trägerlage und auf dem Sieb bzw. dem Filter erstreckt. Die Trägerlage und das Sieb bzw. der Filter sowie die Elastomerschicht werden in eine beheizte Form eingebracht, sodass die Elastomerschicht so in Form gebracht wird, dass sie das Sieb bzw. den Filter mit der Trägerlage verbindet. In dieser Form wird das Elastomer heißvulkanisiert, um die Verbindung zu stabilisieren.

Es wird mindestens eine Elastomerschicht, auf mindestens einem Teil der Trägerlage und auf mindestens einem Teil des Siebs oder Filters, kalt aufgebracht. Dabei erstreckt sich mindestens ein Teil einer Elastomerschicht auf der Trägerlage und dem Sieb oder dem Filter, und überbrückt dadurch einen eventuell vorhandenen Abstand zwischen einer Trägerlage und einem Sieb bzw. einem Filter.

Es ist ebenfalls möglich abweichend von der vorstehenden Reihenfolge die Elastomerschicht, die Trägerlage und das Sieb bzw. den Filter auch in jeder anderen Reihenfolge in die Form einzubringen. Es ist vorgesehen z. B. zuerst einen Teil der Elastomerschicht, dann eine Trägerlage dann das Sieb bzw. den Filter und dann einen zweiten Teil der Elastomerschicht in die Form einzubringen. Es ist ebenfalls vorgesehen die zuerst die Trägerlage, gefolgt von der Elastomerschicht und dem Sieb bzw. dem Filter in die Form einzubringen.

Es ist ebenfalls vorgesehen zuerst den Träger mit Elastomer zu beschichten, in das Werkzeug bzw. die Form einzulegen und dann erst das Sieb bzw. den Filter in Werkzeug einlegen, sodass die Formgebung durch ein Fließen des Elastomers von dem Träger zu dem Sieb/dem Filter erfolgt, und so die Teile miteinander verbindet.

In einer weiteren Ausführungsform der vorliegenden Erfindung wird die Verbindung aus Elastomermaterial, die das Sieb /den Filter lageorientiert mit der Trägerlage verbindet auf eine alternative Weise hergestellt, in dem die Trägerlage und das Sieb bzw. der Filter in eine Form eingebracht wird, die Form geschlossen wird, und dann Elastomermaterial durch Spritzgießen in die Form eingebracht wird, sodass sich das Elastomermaterial auf einem Teil der Trägerlage und auf einem Teil des Siebs oder Filters erstreckt und diese miteinander verbindet.

In einer zusätzlichen Ausführungsform umfasst das Verfahren weiterhin das Aufbringen einer Beschichtung aus Elastomer auf mindestens eine Trägerlage.

In einer weiteren Ausführungsform umfasst das Verfahren weiter das Aufbringen von Haftvermittler auf das das mindestens eine Sieb /den mindestens einen Filter und/oder die mindestens eine Trägerlage, bevor die Verbindung aus Elastomermaterial erzeugt wird, und/oder die Beschichtung aus Elastomer auf mindestens eine der Trägerlagen aufgebracht wird. Gemäß einer anderen beispielhaften Ausführungsform umfasst das Verfahren weiter das Aufbringen von einer oder mehreren Substanzen, die eine Haftung von kalt aufgebrachtem Elastomer auf dem Metall bewirken, auf mindestens eine Trägerlage, ein Sieb und/oder einen Filter, bevor die mindestens eine kalte Elastomerschicht aufgebracht wird. Der Ausdruck "kalte Elastomerschicht" betrifft Temperaturen, bei denen ein Heißvulkanisieren im Wesentlichen noch nicht stattfindet.

Einer andere Ausführungsform des Verfahrens umfasst weiter das Aufbringen eines kontinuierlichen Stegs oder einer kontinuierliche Rippe auf/in die Beschichtung aus Elastomer der mindestens eine Trägerlage und oder auf/in die Verbindung aus Elastomermaterial.

Vorzugsweise wird der mindestens eine kontinuierliche Steg oder die eine kontinuierliche Rippe mit einem allgemein dreieckförmigen Querschnitt gebildet, dessen beziehungsweise deren Höhe zwischen 0,005 und 2,5 mm und weiter bevorzugt zwischen 0,01 und 2 mm und weiter bevorzugt zwischen 0,05 uns 0,5 mm beträgt.

Ein im Allgemeinen dreieckiger Querschnitt bietet einerseits eine definierte Dichtkante und andererseits eine ausreichende Stützung dieser Dichtkante. Ein derart geformter Steg oder eine derart geformte Rippe kann auch bei leicht unebenen oder welligen Dichtflächen eingesetzt werden. Bevorzugt werden mehrere Stege oder Rippen im Wesentlichen konzentrisch oder parallel angeordnet.

In einer weiteren beispielhaften Ausführungsform der vorliegenden Erfindung wird mindestens eine elastomerbedeckte Trägerlage so in die Form eingebracht, dass eine Elastomerschicht nahe dem Rand mindestens der Trägerlage dicker ausgebildet wird, als in der übrigen Dichtung, um eine seitliche Dichtigkeit zu erzeugen. Es ist ebenfalls möglich, die Form und/oder die Elastomerschicht so auszuführen, dass in der Form beim

Heißvulkanisieren eine randseitige Verdickung erzeugt wird.

Im Folgenden wird die vorliegende Erfindung anhand der Beschreibung mit Bezug auf die beigefügten schematischen Zeichnungen erläutert, die einige ausgewählte Beispiele einer erfindungsgemäßen statischen Dichtung darstellen.
Figuren 1A und 1B zeigen eine Teilschnittansicht und eine Teilaufsicht auf einen Ausschnitt der Dichtung für eine Zylinderkopfabdeckung.
Figuren 1C und 1D zeigen eine Teilschnittansicht und eine Teilaufsicht auf einen Ausschnitt einer anderen Ausführungsform der erfindungsgemäßen Dichtung für eine Zylinderkopfabdeckung.
Figuren 2A bis 2E stellen verschiedene andere mögliche Anordnungen von Trägerlagen, Sieben oder Filtern entsprechend Figur 1A dar.
Figur 3 zeigt eine Draufsicht einer Dichtung für eine Zylinderkopfabdeckung, bei der am linken Rand ein Sieb oder Filter integriert ist.
Figuren 4A bis 4D zeigen schematisch die einzelnen Schritte zur Herstellung einer erfindungsgemäßen Dichtung, anhand des Teil-Schittes von Fig, 1A.
Figuren 5A bis 5D zeigen schematisch die einzelnen Schritte zur Herstellung einer erfindungsgemäßen Dichtung, anhand des Teil-Schittes von Fig, 1A.

Sowohl in den Figuren als auch in der Beschreibung werden gleiche oder ähnliche Bezugszeichen für gleiche oder ähnliche Elemente oder Bauteile verwendet.

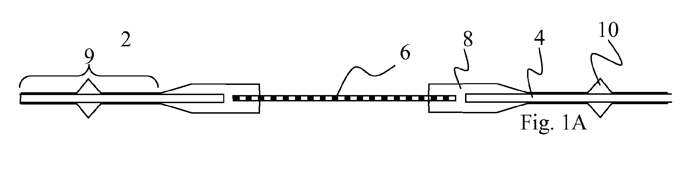

Figur 1A zeigt eine Teilschnittansicht eines Ausschnitts einer Dichtung für eine Zylinderkopfabdeckung für Verbrennungsmotoren. Die Dichtung umfasst eine Trägerlage 4, die einen Kern bildet, der durch einen flachen Metallstreifen aus verzinktem Stahl gebildet ist. Dieser Streifen ist auf seinen beiden Seiten zumindest teilweise mit Elastomer 8 / 9, wie etwa Silikon, bedeckt.

Die Dicke des Kerns liegt bei etwa 0,2 mm. Die Dicke jeder Elastomerschicht variiert zwischen etwa 0 bis 0,3 mm. Die in der Zeichnung dargestellte Dichtung weist eine Durchgangsöffnung auf, die mit einem Sieb 6 bedeckt ist. Das Sieb 6 ist in der dargestellten Schnittansicht nur durch die Verbindung 8 aus Elastomer mit der Trägerlage 4 verbunden. Neben der Verbindung ist die Trägerlage mit einer Beschichtung 9 aus Elastomer versehen, die einstückig mit der Verbindung 8 ausgeführt ist. Die Dicke der Verbindung 8 bzw. der in der Beschichtung 9 gebildeten Stege 10 oder Rippen kann variiert werden, um eine unterschiedliche Verpressung der Dichtung zu berücksichtigen. Die Dicke Verbindung 8 bzw. der in der Beschichtung 9 bzw. die Höhe der Stege 10 oder Rippen kann an der Stelle am größten gewählt werden, an der die Verpressung am geringsten ist.

Im Bereich hoher Verpressung kann die Dicke der Dichtung kaum größer als die Dicke der Trägerlage 4 sein, während in den Bereichen geringerer Verpressung, die Dicke der Dichtung in der Größenordnung von 0,35 bis 0,40 mm liegen kann.

Die Beschichtung 9 ist mit einem geschlossenen Steg 10 oder mit einer geschlossenen Rippe mit einem allgemein dreieckigen Querschnitt versehen. Die Höhe des Stegs 10 oder der Rippe beträgt oder variiert in der dargestellten Ausführungsform zwischen 0,1 bis 0,5 mm. Die Stege 10 sind unter Berücksichtigung der Verpressung angeordnet, die auf die Dichtung zur Sicherung einer optimalen Dichtigkeit ausgeübt wird. Deshalb kann in den Bereichen einer hohen Verpressung nur ein einziger Steg vorgesehen sein, während in Bereichen mit geringerer Verpressung zwei oder drei parallele Stege 10 vorhanden sein können, die hintereinandergeschaltete Dichtungsbarrieren bilden. Es ist ebenfalls vorgesehen, die Höhe der Stege 10 an die lokalen Dichtigkeitsanforderungen anzupassen.

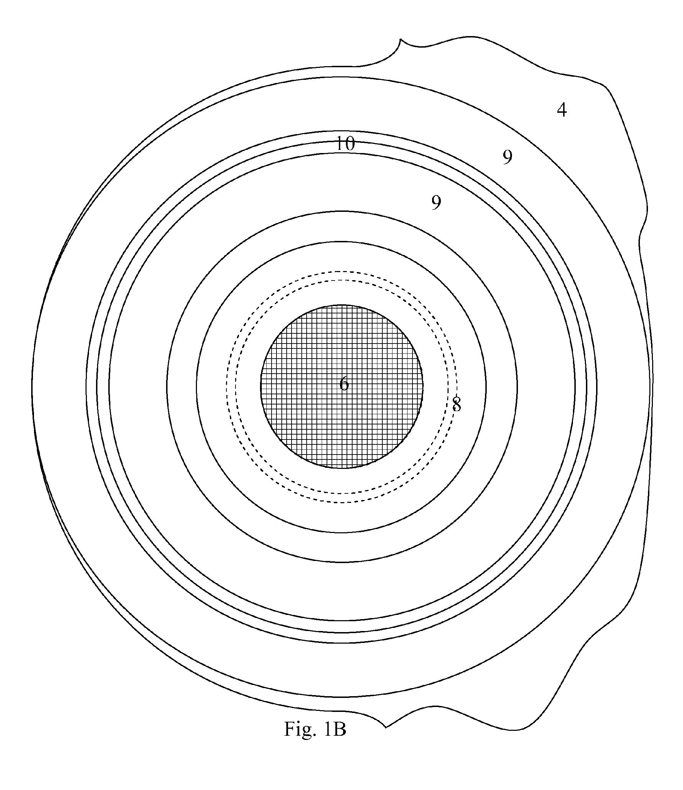

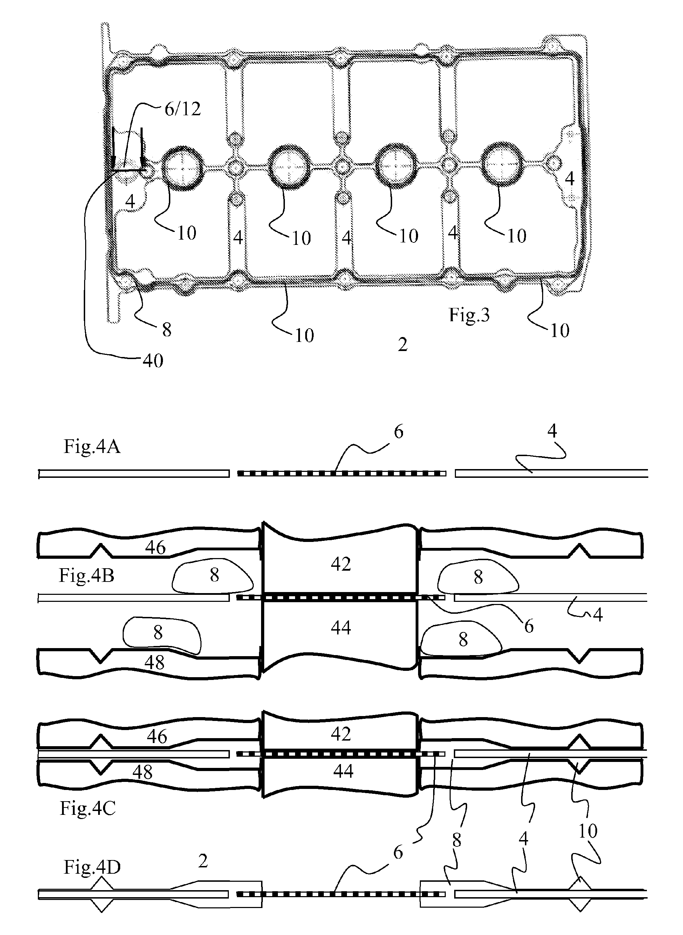

Figur 1B zeigt eine Teildraufsicht auf einen Ausschnitt der Dichtung für eine Zylinderkopfabdeckung. Die einzelnen Merkmale der Figur 1B sind mit gestrichelten Linien mit den entsprechenden Merkmalen der Figur 1A verbunden. In der Draufsicht ist zu erkennen, dass die Trägerlage 4 fast vollständig von Elastomer bedeckt ist. Das Elastomer bildet dabei einerseits eine Beschichtung 9 der Trägerlage und andererseits eine Verbindung 8 zwischen dem Sieb 6 und der Trägerlage 4. Es ist in der Zusammenschau mit Figur 1A ebenfalls erkennbar, dass das Sieb 6 nicht direkt mit der Trägerlage 4 in Kontakt steht, sondern dass diese Teile nur durch die Verbindung 8 miteinander verbunden sind. Der Steg 10 ist in der Draufsicht durch drei konzentrische kreise dargestellt. Eine mögliche Gesamtansicht einer Dichtung einer Zylinderkopfabdeckung ist in Figur 3 dargestellt.

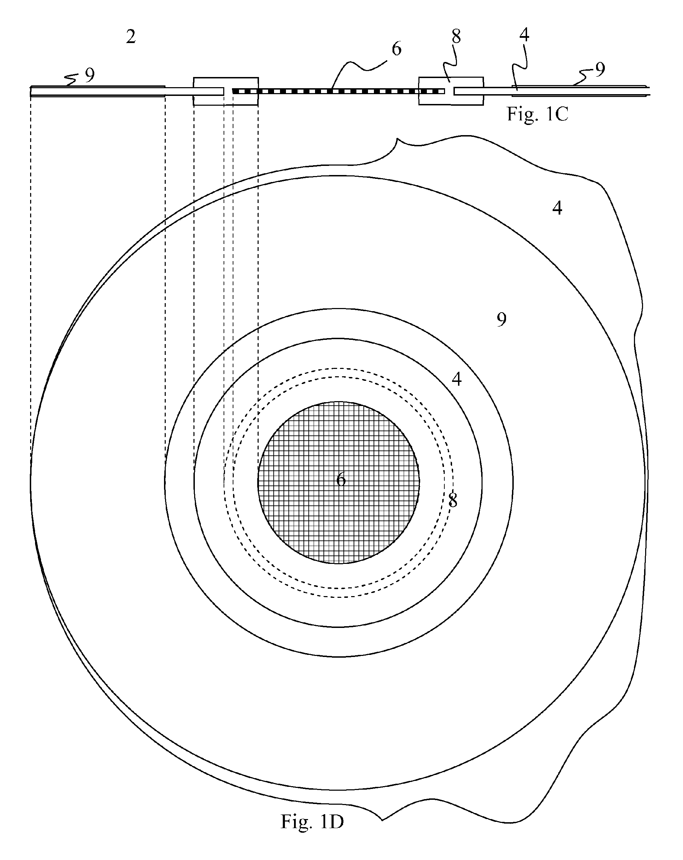

Figur 1C zeigt eine Teilschnittansicht eines Ausschnitts einer anderen Ausführungsform einer erfindungsgemäßen Dichtung für eine Zylinderkopfabdeckung für Verbrennungsmotoren. Die Dichtung umfasst eine Trägerlage 4, die einen Kern bildet, der durch einen flachen Metallstreifen aus verzinktem Stahl gebildet ist. Dieser Streifen ist auf seinen beiden Seiten zumindest teilweise mit Elastomer 8 / 9, wie etwa Silikon, bedeckt.

Die Dicke des Kerns entspricht der der Figur 1A, mit dem Unterschied, dass die Beschichtung der Trägerlage nicht mit einem Steg versehen ist. Die in der Zeichnung dargestellte Dichtung weist eine Durchgangsöffnung auf, die mit einem Sieb 6 bedeckt ist. Das Sieb 6 ist in der dargestellten Schnittansicht nur durch die Verbindung 8 aus Elastomer mit der Trägerlage 4 verbunden.

Neben der Verbindung ist die Trägerlage mit einer separaten Beschichtung 9 aus Elastomer versehen, die getrennt von der Verbindung 8 ausgeführt ist. Die Dicke und das Material der Verbindung 8 kann sich von dem der in der Beschichtung 9 unterscheiden. Die Dicke bzw. die Höhe der Verbindung 8 und die Beschichtung 9 kann variiert werden, um eine unterschiedliche Verpressung der Dichtung zu berücksichtigen.

Die Beschichtung 9 ist wie in Figur 1C ohne einen geschlossenen Steg 10 ausgeführt.

Figur 1D zeigt eine Teildraufsicht auf einen Ausschnitt der Dichtung für eine Zylinderkopfabdeckung. Die einzelnen Merkmale der Figur 1B sind mit gestrichelten Linien mit den entsprechenden Merkmalen der Figur 1A verbunden. In der Draufsicht ist zwischen der Beschichtung 9 und der Verbindung 8 die Trägerlage 4 zu erkennen. Das Elastomer der Beschichtung 9 der Trägerlage kann sich von dem Elastomermaterial, das die Verbindung 8 bildet, unterscheiden.

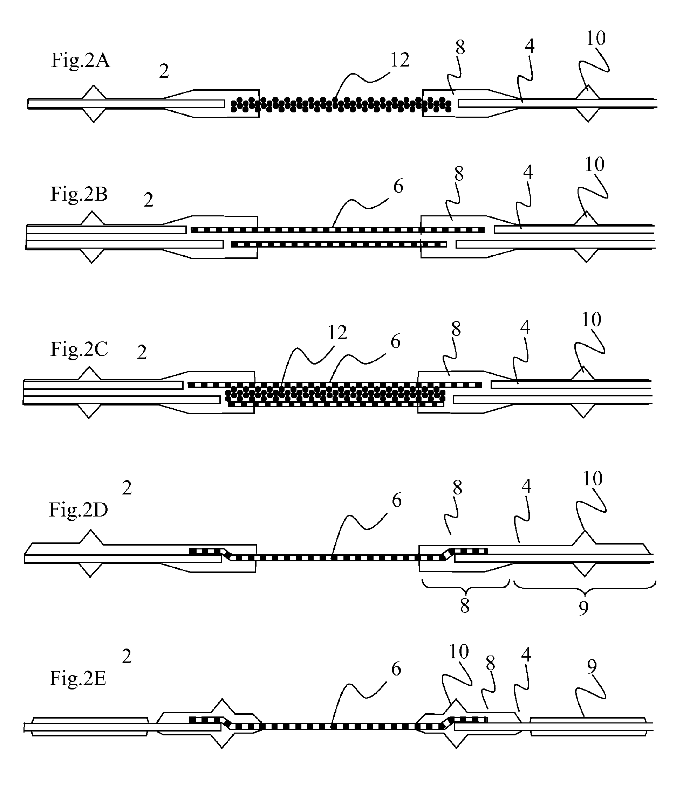

Figur 2A stellt eine Ausführungsform dar bei der das Sieb von Figur 1A durch einen Filter 12 ersetzt ist. Der übrige Aufbau der Dichtung entspricht der Figur 1A.

Figur 2B zeigt eine Dichtung mit zwei verschiedenen übereinander angeordneten Trägerlagen 4, um eine dickere Dichtung bereitzustellen. Im Gegensatz zu dem Aufbau von Figur 1A sind ebenfalls zwei Siebe 6 in der Dichtung angeordnet. Die Siebe 6 weisen unterschiedliche Durchmesser auf, sodass sich bei einer Strömung von oben durch das Sieb dieses nicht aus der Elastomerschicht 8 gerissen werden kann, da der Durchmesser des oberen Siebs 6 größer als die entsprechende Ausnehmung in der unteren Trägerlage ist.

Figur 2C entspricht im Aufbau im Wesentlichen der in der Figur 2B dargestellten Ausführungsform, wobei zwischen den beiden Sieben 6 noch ein zusätzlicher Filter 12 angeordnet ist. Dabei wird der Filter 12 von den Sieben 6 gestützt.

Figur 2D zeigt eine Dichtung, deren Aufbau im Wesentlichen der in der Figur 1A dargestellten Ausführungsform entspricht. Im Unterschied zu Figur 1A ist das Sieb 6 jedoch größer als die entsprechende Ausnehmung bzw. Durchgangsöffnung in der Trägerlage 4. Zur Zentrierung ist das Sieb 6 mit einer Halbsicke versehen, die das Sieb beim Einlegen in bzw. beim Auflegen auf die Trägerlage bezüglich der Durchgangsöffnung in der Trägerlage 4 zentriert. Weiterhin erhöht dieser Aufbau die Festigkeit der Verbindung zwischen der Trägerlage 4 und dem Sieb 6.

Figur 2D zeigt einen Querschnitt durch eine Dichtung, deren Aufbau im Wesentlichen der in der Figur 1C bzw. 1D dargestellten Ausführungsform entspricht. Im Unterschied zu Figur 1A ist das Sieb 6 jedoch größer als die entsprechende Ausnehmung bzw. Durchgangsöffnung in der Trägerlage 4. Zur Zentrierung ist das Sieb 6 mit einer Halbsicke versehen, die das Sieb beim Einlegen in bzw. beim Auflegen auf die Trägerlage bezüglich der Durchgangsöffnung in der Trägerlage 4 zentriert. Weiterhin erhöht dieser Aufbau die Festigkeit der Verbindung zwischen der Trägerlage 4 und dem Sieb 6.

Weiterhin ist die Dichtung von Figur 2D mit Stegen 10 oder Rippen versehen, die auf der Verbindung 8 angeordnet sind. In der dargestellten Ausführungsform wird die Abdichtung der Durchgangsöffnung durch das Elastomer der Verbindung 8 und den Stegen 10 erreicht.

Es ist ebenfalls vorgesehen, Stege sowohl auf der Verbindung 8, als auch auf der Beschichtung 9 anzubringen.

Figur 3 zeigt eine Draufsicht auf eine Dichtung für eine Zylinderkopfabdeckung, bei der am linken Rand ein Sieb oder Filter integriert ist. Die Figuren 1A und 2A bis 2D können ebenfalls einer Schnittansicht entlang der Linie 40 von Figur 3 entsprechen. In der Figur 3 sind klar weitere Stege 10 zu erkennen. Figur 3 zeigt ebenfalls Bereiche, in denen die Trägerlage 4 nicht von Elastomer bedeckt ist. In Figur 3 sind andere Bereiche der Trägerlage ebenfalls mit Elastomer 8 bedeckt.

Figuren 4A bis 4D zeigen schematisch die einzelnen Schritte zur Herstellung einer erfindungsgemäßen Dichtung, anhand des Teil-Schittes von Fig, 1A.

In Figur 4A wird eine Trägerlage 4 und ein Sieb 6 bereitgestellt, und nahe beieinander angeordnet.

In Figur 4B wurde eine Elastomerschicht 8 in Form einer Raupe auf mindestens einem Teil einer Trägerlage 4 und auf mindestens einem Teil des Siebs 6 aufgebracht. Die Trägerlage 4 wird zusammen mit dem Sieb 6 in eine Form 42, 44, 46, 48 eingebracht. Die kolbenförmigen Teile 42 und 44 werden dabei zuerst auf das Sieb 6 abgesenkt, um zu verhindern, dass beim Schließen der anderen Teile 46, 48 der Form Elastomer in die Maschen bzw. Poren des Siebs eintreten kann. Dann werden die Formenteile 46 und 48 geschlossen.

In Figur 4C sind die Formenteile 46 und 48 geschlossen und haben dabei das Elastomer 8 gleichmäßig zwischen den Formenteilen 42, 44, 46, 48 verteilt. Die geschlossene Form wird dann erhitzt und das Elastomer heiß zu vulkanisieren.

Nach dem Heißvulkanisieren wird die Form geöffnet und die fertige Dichtung kann entnommen werden. Die fertige Dichtung von Figur 4D entspricht dem Ausschnitt von Figur 1A. Die Elastomerschicht der Dichtung von Figur 4D ist vulkanisiert, und die Dichtung weist durch die mindestens eine Trägerlage 4 eine Festigkeit auf, die der Festigkeit einer Trägerrahmendichtung nur wenig nachsteht.

Die Elastomerschichten 8 können in einem Arbeitsgang aufgebracht werden und die Befestigung des Siebs 6 in der Dichtung 2 erfolgt ebenfalls in einem Arbeitsgang. Die Haftung zwischen dem Elastomer 8 und der Trägerlage kann mittels Haftsubstanzen verbessert werden. Durch das Einlegen in eine geheizte Form werden zuerst die Elastomerschichten geformt und dann vulkanisiert. Es ist ebenfalls möglich, diese Befestigung durch eine mechanische Verankerung zu verbessern, und zwar mit Hilfe von Durchbrüchen, die zu beiden Seiten in die Trägerlage 4 eingebracht werden, wobei diese Durchbrüche nicht nur die mechanische Verankerung der Polymerschichten herstellen, sondern auch als Anschlag für das Zusammenpressen dienen.

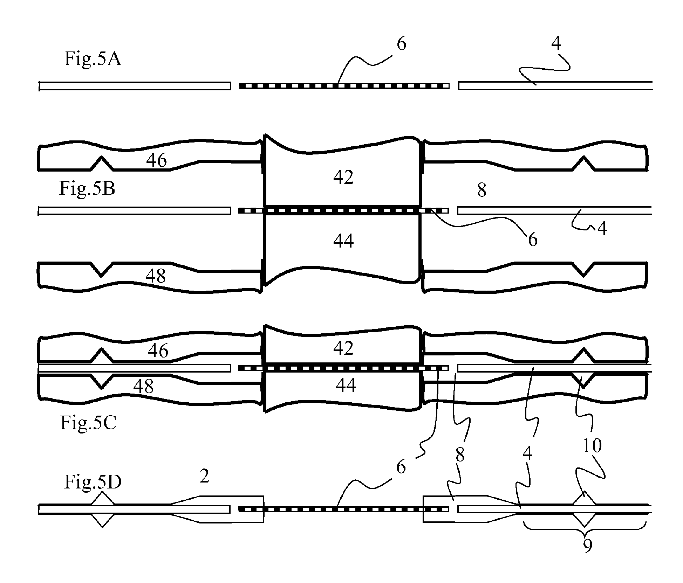

Figuren 5A bis 5D zeigen schematisch die einzelnen Schritte zur Herstellung einer erfindungsgemäßen Dichtung, anhand des Teil-Schittes von Fig, 1A.

In Figur 5A wird eine Trägerlage 4 und ein Sieb 6 bereitgestellt, wobei das Sieb 6 in einer Durchgangsöffnung der Trägerlage 4 angeordnet ist.

In Figur 5B werden die Trägerlage 4 und das Sieb 6 in eine Form eingebracht und zueinander ausgerichtet.

In Figur 5C wird die Form 42, 44 46, 48, um die Trägerlage 4 und das Sieb 6 geschlossen und Elastomermaterial in die Form eingespritzt.

Durch das Spritzgießen des Elastomers wurde in der Form die Verbindung 8 und die Beschichtung 9 der Trägerlage mit einem umlaufenden Steg 10 gebildet. Die kolbenförmigen Teile 42 und 44 wurden vor dem Spritzgießen abgesenkt, um zu verhindern, dass beim Gießen Elastomer in die Maschen bzw. Poren des Siebs eintreten kann.

Es ist ebenfalls möglich, eine nur zweiteilige Form zu verwenden.

Nach dem Abkühlen des Elastomers und dessen Verfestigung wird die Form zur Entnahme der fertigen Dichtung geöffnet.

Die fertige Dichtung von Figur 5D entspricht dem Ausschnitt von Figur 1A. Es ist jedoch klar, dass mit (abgewandelten) Verfahren der Figuren 4A bis 5D ebenfalls alle Dichtungsquerschnitte hergestellt werden können, wie sie in den Figuren 2A bis 2E dargestellt sind oder sich aus Kombinationen der Merkmale ergeben, wie sie in den Figuren 1A bis 3 dargestellt sind. Es wird explizit darauf hingewiesen, dass alle möglichen Dichtungen, die sich aus Kombinationen von Merkmalen, wie sie in der Beschreibung und in den Figuren offenbart sind, ergeben ebenfalls als offenbart anzusehen sind.

Es ist etwas ebenfalls als offenbart anzusehen das Sieb aus Figur 2D mit mehreren Trägerlagen wie in Figur 2B dargestellt zu kombinieren.

Die Erfindung ermöglicht eine große Vereinfachung der bestehenden Technik, indem sie eine Dichtung mit einem Sieb oder Filterelement bereitstellt, die einfach in einem Arbeitsgang hergestellt werden kann. Durch die Trägerlage, die aus einem preiswerten Material hergestellt werden kann ist, wird eine ausreichende mechanische Festigkeit der Dichtung ermöglicht. Die Elastomerschichten auf der Trägerlage stellen die Abdichtungsfunktion der Dichtung sicher. Die Dicke der Elastomerschichten kann variiert werden, um sie den mit der Umgebung der Dichtung verbundenen Druckbelastungen anzupassen.

## Patentansprüche

1. Dichtung, umfassend:
- mindestens eine Trägerlage (4) mit mindestens einer Durchgangsöffnung, wobei die Trägerlage (4) eine Beschichtung (9) aus Elastomer aufweist;
- mindestens ein Sieb (6) oder einen Filter (12);
wobei das mindestens eine Sieb (6) oder der mindestens eine Filter (12) in mindestens einer der Durchgangsöffnungen angeordnet ist;
wobei das mindestens eine Sieb (6) oder der mindestens eine Filter (12) durch eine Verbindung (8) aus Elastomermaterial mit der mindestens einen Trägerlage (4) verbunden ist und lageorientiert in der Durchgangsöffnung gehalten ist;
wobei die Verbindung (8) aus Elastomermaterial verdickt ausgeführt ist und als Abdichtung der Durchgangsöffnung dient; und
wobei die verdickte Verbindung (8) aus Elastomermaterial einstückig mit der Beschichtung (9) aus Elastomer der Trägerlage (4) ausgeführt ist.

2. Dichtung, umfassend:
- mindestens eine Trägerlage (4) mit mindestens einer Durchgangsöffnung, wobei die Trägerlage (4) eine Beschichtung (9) aus Elastomer aufweist;
- mindestens ein Sieb (6) oder einen Filter (12);
wobei das mindestens eine Sieb (6) oder der mindestens eine Filter (12) in mindestens einer der Durchgangsöffnungen angeordnet ist;
wobei das mindestens eine Sieb (6) oder der mindestens eine Filter (12) durch eine Verbindung (8) aus Elastomermaterial mit der mindestens einen Trägerlage (4) verbunden ist und lageorientiert in der Durchgangsöffnung gehalten ist;
wobei die Verbindung (8) aus Elastomermaterial gegenüber der Beschichtung (9) aus Elastomer verdickt ausgerührt ist und als Abdichtung der Durchgangsöffnung dient;
und
wobei die verdickte Verbindung (8) aus Elastomermaterial getrennt von der Beschichtung (9) aus Elastomer der Trägerlage (4) ausgeführt ist.

3. Dichtung nach einem der Ansprüche -1 oder 2, **dadurch gekennzeichnet, dass** die verdickte Verbindung (8) und die Beschichtung (9) aus Elastomer der Trägerlage (4) aus unterschiedlichen Werkstoffen bestehen.

4. Dichtung nach einem der Ansprüche 1-3, **dadurch gekennzeichnet, dass** die Beschichtung (9) aus Elastomer der Trägerlage (4) eine Verdickung in Umfangsrichtung aufweist, die als eine Rippe (10) oder als ein Steg ausgeführt ist, oder dass die Verbindung (8) aus Elastomermaterial mit einer Rippe (10) oder einem Steg ausgeführt ist.

5. Dichtung nach einem der Ansprüche 1-4, **dadurch gekennzeichnet, dass** die Verdickung und oder die Rippe (10) oder der Steg in Umfangsrichtung unterschiedliche Höhen und/oder Breiten aufweist.

6. Dichtung nach einem der Ansprüche 1-5, **dadurch gekennzeichnet, dass** die Verdickung und oder die Rippe (10) oder der Steg eine Höhe aufweist, die im Bereich von 0,05 - 3 mm liegt.

7. Dichtung gemäß einem der vorstehenden Ansprüche, wobei die mindestens eine Trägerlage (4) Stahl, kohlenstoffarmen Stahl, verzinkten kohlenstoffarmen Stahl, Edelstahl, Aluminium oder einen thermoplastischen oder duroplastischen Polymerwerkstoff umfasst.

8. Verfahren zur Herstellung einer Dichtung (2), umfassend:
- Bereitstellen mindestens einer Trägerlage (4) mit mindestens einer Durchgangsöffnung;
- Aufbringen einer Beschichtung (9) aus Elastomer auf die mindestens eine Trägerlage (4);
- Bereitstellen mindestens eines Siebs (6) oder eines Filters (12);
- Anordnen des mindestens einen Siebs (6) oder des mindestens einen Filters (12) lageorientiert in mindestens einer Durchgangsöffnung der Trägerlage (4) in einer Form;
- Erzeugen einer Verbindung (8) aus Elastomermaterial, die das mindestens eine Sieb (6) oder den mindestens einen Filter (12) lageorientiert mit der mindestens einen Trägerlage (4) verbindet;
wobei das Aufbringen einer Beschichtung (9) aus Elastomer auf die mindestens eine Trägerlage (4) und das Erzeugen einer Verbindung (8) aus Elastomermaterial, die das mindestens eine Sieb (6) oder den mindestens einen Filter (12) lageorientiert mit mindestens einer Trägerlage (4) verbindet, umfasst:
- Kaltaufbringen mindestens einer Elastomerschicht (8, 9) auf mindestens einem Teil der Trägerlage (4) und auf mindestens einem Teil des Siebs (6) oder des Filters (12), wobei sich mindestens ein Teil der Elastomerschicht (8, 9) auf der Trägerlage (4) und auf dem Sieb (6) oder dem Filter (12) erstreckt;
- Einbringen der mindestens einen Trägerlage (4) und des mindestens einen Siebs (6) oder Filters (12) sowie der mindestens einen Elastomerschicht (8, 9) in eine beheizte Form (42, 44, 46, 48), so dass die mindestens eine Elastomerschicht (8, 9) so in Form (42, 44, 46, 48) gebracht wird, dass sie das Sieb (6) oder den Filter (12) mit der Trägerlage (4) verbindet; und
- Heißvulkanisieren des Elastomers (8, 9) in der Form.

9. Verfahren zur Herstellung einer Dichtung (2), umfassend:
- Bereitstellen mindestens einer Trägerlage (4) mit mindestens einer Durchgangsöffnung;
- Aufbringen einer Beschichtung (9) aus Elastomer auf die mindestens eine Trägerlage (4);
- Bereitstellen mindestens eines Siebs (6) oder eines Filters (12);
- Anordnen des mindestens einen Siebs (6) oder eines Filters (12) lageorientiert in mindestens einer Durchgangsöffnung der Trägerlage (4) in einer Form;
- Erzeugen einer Verbindung (8) aus Elastomermaterial, die das mindestens eine Sieb (6) oder
den mindestens einen Filter (12) lageorientiert mit der mindestens einen Trägerlage (4) verbindet;
wobei das Aufbringen einer Beschichtung (9) aus Elastomer auf die mindestens eine Trägerlage (4) und das Erzeugen einer Verbindung (8) aus Elastomermaterial, die das mindestens eine Sieb (6) oder den mindestens einen Filter (12) lageorientiert mit mindestens einer Trägerlage (4) verbindet, umfasst:
Einbringen der mindestens einen Trägerlage (4) und des mindestens einen Siebs (6) oder Filters (12) in eine Form und Schließen der Form;
Einbringen und Formen von Elastomermaterial in die Form durch Spritzgießen, so dass das Elastomermaterial sich auf einem Teil der mindestens einen Trägerlage (4) und auf einem Teil des Siebs (6) oder Filters (12) erstreckt und diese miteinander verbindet.

10. Verfahren gemäß einem der Ansprüche 8 oder 9, weiter umfassend:
- Aufbringen von Haftvermittler auf das mindestens eine Sieb (6) oder den mindestens einen Filter (12) und/oder die mindestens eine Trägerlage (4), bevor die Verbindung (8) aus Elastomermaterial erzeugt wird und/oder die Beschichtung (9) aus Elastomer auf die mindestens eine Trägerlage (4) aufgebracht wird.

11. Verfahren gemäß einem der Ansprüche 8 bis 10, weiter umfassend:
- Aufbringen eines kontinuierlichen Stegs (10) oder einer kontinuierlichen Rippe auf oder in die Beschichtung (9) aus Elastomer der mindestens einen Trägerlage (4).

12. Verfahren gemäß Anspruch 11, **dadurch gekennzeichnet, dass** mindestens ein kontinuierlicher Steg (10) oder eine kontinuierliche Rippe mit einem allgemein dreieckförmigen Querschnitt gebildet wird, dessen bzw. deren Höhe zwischen 0,005 und 2,5 mm und weiter bevorzugt zwischen 0,01 und 0,5 mm beträgt.

## Claims

1. Seal, comprising:
- at least one supporting layer (4) having at least one passage opening, wherein the supporting layer (4) has a coating (9) from elastomer;
- at least one screen (6) or one filter (12); wherein the at least one screen (6) or the at least one filter (12) is arranged in at least one of the passage openings;
wherein the at least one screen (6) or the at least one filter (12) is connected to the at least one supporting layer (4) through a joint (8) from elastomer material and is held in the passage opening in a position-oriented manner;
wherein the joint (8) from elastomer material is designed to be thickened and serves for sealing the passage opening; and
wherein the thickened joint (8) from elastomer is formed integrally with the elastomer coating (9) of the supporting layer (4).

2. Seal, comprising:
- at least one supporting layer (4) having at least one passage opening, wherein the supporting layer (4) has a coating (9) from elastomer;
- at least one screen (6) or one filter (12); wherein the at least one screen (6) or the at least one filter (12) is arranged in at least one of the passage openings;
wherein the at least one screen (6) or the at least one filter (12) is connected to the at least one supporting layer (4) through a joint (8) from elastomer material and is held in the passage opening in a position-oriented manner;
wherein the joint (8) from elastomer material is designed to be thickened with respect to the coating (9) and serves for sealing the passage opening;
and
wherein the thickened joint (8) is implemented separately from the elastomer coating (9) of the supporting layer (4).

3. Seal according to claims 1 or 2, **characterized in that** the thickened joint (8) and the elastomer coating (9) of the supporting layer (4) consist of different materials.

4. Seal according to any one of the claims 1 to 3, **characterized in that** the elastomer coating (9) of the supporting layer (4) has a thickening in the circumferential direction which is designed as a rib (10) or as a ridge, or that the joint (8) from elastomer material is designed with a rib (10) or a ridge.

5. Seal according to any one of the claims 1 to 4, **characterized in that** the thickening and/or the rib (10) or the ridge has different heights and/or widths in the circumferential direction.

6. Seal according to any one of the claims 1 to 5, **characterized in that** the thickening and/or the rib (10) or the ridge has a height in the range of from 0.05 - 3 mm.

7. Seal according to any one of the preceding claims, wherein the at least one supporting layer (4) comprises steel, low-carbon steel, carbonized low-carbon steel, stainless steel, aluminum or a thermoplastic or thermosetting polymer material.

8. Method for producing a seal (2), comprising:
- providing at least one supporting layer (4) having at least one passage opening;
- applying a coating (9) from elastomer onto the at least one supporting layer (4);
- providing at least one screen (6) or one filter (12);
- arranging the at least one screen (6) or the at least one filter (12) in a position-oriented manner in at least one passage opening of the supporting layer (4) in a mold;
- generating a joint (8) from elastomer material, which said joint connects the at least one screen (6) or the at least one filter (12) in a position-oriented manner to the at least one supporting layer (4);
wherein applying a coating (9) from elastomer onto the at least one supporting layer (4) and generating a joint (8) from elastomer material, which said joint connects the at least one screen (6) or the at least one filter (12) in a position-oriented manner to the at least one supporting layer (4), comprises:
- cold depositing at least one elastomer layer (8, 9) onto at least a portion of the supporting layer (4) and onto at least a portion of the screen (6) or the filter (12), wherein at least a portion of the elastomer layer (8, 9) extends over the supporting layer (4) and over the screen (6) or over the filter (12);
- placing the at least one supporting layer (4) and the at least one screen (6) or filter (12) as well as the at least one elastomer layer (8, 9) into a heated mold (42, 44, 46, 48) so that the at least one elastomer layer (8, 9) is brought into the mold (42, 44, 46, 48) in such a manner that it connects the screen (6) or the filter (12) to the supporting layer (4); and
- hot vulcanizing the elastomer (8, 9) in the mold.

9. Method for producing a seal (2), comprising:
- providing at least one supporting layer (4) having at least one passage opening;
- applying a coating (9) from elastomer onto the at one supporting layer (4);
- providing at least one screen (6) or one filter (12);
- arranging the at least one screen (6) or the at least one filter (12) in a position-oriented manner in at least one passage opening of the supporting layer (4) in a mold;
- generating a joint (8) from elastomer material, which said joint connects the at least one screen (6) or the at least one filter (12) in a position-oriented manner to the at least one supporting layer (4);
wherein applying a coating (9) from elastomer onto the at least one supporting layer (4) and generating a joint (8) from elastomer material, which said joint connects the at least one screen (6) or the at least one filter (12) in a position-oriented manner to the at least one supporting layer (4), comprises:
placing the at least one supporting layer (4) and the at least one screen (6) or filter (12) into a mold and closing the mold;
introducing and molding elastomer material in the mold by means of injection molding so that the elastomer material extends over a portion of the at least one supporting layer (4) and over a portion of the screen (6) or the filter (12) and connects them to one another.

10. Method according to claim 8 or claim 9, further comprising:
- applying a bonding agent onto the at least one screen (6) or the at least one filter (12) and/or the at least one supporting layer (4) before the joint (8) from elastomer material is generated and/or the coating (9) from elastomer is applied onto the at least one supporting layer (4).

11. Method according to any one of the claims 8 to 10, further comprising:
- applying a continuous ridge (10) or a continuous rib onto or into the elastomer coating (9) of the at least one supporting layer (4).

12. Method according to claim 11, **characterized in that** at least one continuous ridge (10) or one continuous rib is formed with a generally triangular cross-section, the height of which is between 0.005 and 2.5 mm and more preferred between 0.01 and 0.5 mm.

## Revendications

1. Joint d'étanchéité, comprenant :
- au moins une couche porteuse (4) comportant au moins une ouverture traversante, dans lequel la couche porteuse (4) présente un revêtement (9) en élastomère;
- au moins un tamis (6) ou un filtre (12) ;
dans lequel au moins un tamis (6) ou au moins un filtre (12) est disposé dans au moins un des ouvertures traversantes ;
dans lequel au moins un tamis (6) ou au moins un filtre (12) est relié par une liaison (8) constituée de matériaux élastomères avec au moins une couche porteuse (4) et est maintenu de manière orientée en position dans l'ouverture traversante ;
dans lequel la liaison (8) en matériaux élastomères est conçu de manière épaissie et sert d'isolation étanche de l'ouverture traversante ; et
dans lequel la liaison épaissie (8) en matériaux élastomères est conçue en un seul tenant avec le revêtement (9) en élastomère de la couche porteuse (4).

2. Joint d'étanchéité, comprenant :
- au moins une couche porteuse (4) comportant au moins une ouverture traversante, dans lequel la couche porteuse (4) présente un revêtement (9) en élastomère;
- au moins un tamis (6) ou un filtre (12) ;
dans lequel au moins un tamis (6) ou au moins un filtre (12) est disposé dans au moins un des ouvertures traversantes ;
dans lequel au moins un tamis (6) ou au moins un filtre (12) est relié par une liaison (8) constituée de matériaux élastomères avec au moins une couche porteuse (4) et est maintenu de manière orientée en position dans l'ouverture traversante ;
dans lequel la liaison (8) en matériaux élastomères est conçue de manière épaissie par rapport au revêtement en élastomère (9) et sert d'isolation étanche de l'ouverture traversante ; et
dans lequel la liaison épaissie (8) en matériaux élastomères est conçue séparée du revêtement (9) en élastomère de la couche porteuse (4).

3. Joint d'étanchéité selon une des revendications 1 ou 2, **caractérisée en ce que** la liaison épaissie (8) et le revêtement (9) en élastomères de la couche porteuse (4) sont constitués de matériaux différents.

4. Joint d'étanchéité selon un des revendications 1 - 3, **caractérisée en ce que** le revêtement (9) en élastomère de la couche porteuse (4) présente un épaississement dans la direction circonférentielle, qui est conçu comme une nervure (10) ou comme un gradin ou **en ce que** la liaison (8) en matériaux élastomères est conçue avec une nervure (10) ou un gradin.

5. Joint d'étanchéité selon un des revendications 1 - 4, **caractérisée en ce que** l'épaississement et ou la nervure (10) ou le gradin dans la direction circonférentielle présente des hauteurs et/ou largeurs différentes.

6. Joint d'étanchéité selon une revendication 1 - 5, **caractérisé en ce que** l'épaississement et ou la nervure (10) présente une hauteur, qui est comprise dans la plage de 0,05 - 3 mm.

7. Joint d'étanchéité selon une des revendications précédentes, dans lequel au moins une couche porteuse (4) présente de l'acier, acier pauvre en carbone, acier pauvre en carbone galvanisé, acier inoxydable, aluminium ou un matériau polymère thermoplastique ou duroplastique.

8. Procédé de fabrication d'un joint d'étanchéité (2) comprenant de :
- fournir au moins une couche porteuse (4) avec au moins d'ouverture traversante ;
- appliquer un revêtement (9) en élastomère sur au moins une couche porteuse (4) ;
- fournir au moins un tamis (6) ou un filtre (12) ;
- disposer au moins un tamis (6) ou au moins un filtre (12) orienté en position dans au moins une ouverture traversante de la couche porteuse (4) dans un moule ;
- produire une liaison (8) en matériaux élastomères, qui relie au moins un tamis (6) ou au moins un filtre (12) orienté en position avec au moins couche porteuse (4) ;
dans lequel l'application d'un revêtement (9) en élastomères sur au moins une couche porteuse (4) et la production d'une liaison (8) en matériaux élastomères, qui relie au moins un tamis (6) ou au moins un filtre (12) orienté en position avec au moins une couche porteuse (4), comprend de :
- appliquer à froid au moins une couche élastomère (8, 9) sur au moins une partie de la couche porteuse (4) et sur au moins une partie du tamis (6) ou du filtre (12), dans lequel au moins une partie de la couche élastomère (8, 9) s'étend sur la couche porteuse (4) et sur le tamis (6) ou le filtre (12) ;
- appliquer au moins une couche porteuse (4) et au moins un tamis (6) ou filtre (12) ainsi qu'au moins une couche élastomère (8, 9) dans un moule chauffé (42, 44, 46, 48), de telle sorte qu'au moins une couche élastomère (8, 9) soit appliquée dans le moule (42, 44, 46, 48), de sorte qu'elle relie le tamis (6) ou le filtre (12) avec la couche porteuse (4) ; et
- vulcaniser à chaud l'élastomère (8, 9) dans le moule.

9. Procédé de fabrication d'un joint d'étanchéité (2), comprenant de :
- fournir au moins une couche porteuse (4) comportant au moins une ouverture traversante ;
- appliquer un revêtement (9) en élastomère sur au moins une couche porteuse (4) ;
- fournir au moins un tamis (6) ou un filtre (12) ;
- disposer au moins un tamis (6) ou au moins un filtre (12) orienté en position dans au moins une ouverture traversante de la couche porteuse (4) dans un moule ;
- produire une liaison (8) en matériaux élastomères, qui relie au moins un tamis (6) ou au moins un filtre (12) orienté en position avec au moins couche porteuse (4) ;
dans lequel l'application d'un revêtement (9) en élastomères sur au moins une couche porteuse (4) et la production d'une liaison (8) en matériaux élastomères, qui relie au moins un tamis (6) ou au moins un filtre (12) orienté en position avec au moins une couche porteuse (4), comprend de :
appliquer au moins une couche porteuse (4) et au moins un tamis (6) ou un filtre (12) dans un moule et fermer le moule ;
appliquer et façonner le matériau élastomère par moulage par injection, de telle sorte que le matériau élastomère s'étende sur une partie d'au moins une couche porteuse (4) et sur une partie du tamis (6) ou du filtre (12) et relie ces derniers.

10. Procédé selon un des revendications 8 ou 9, comprenant en outre de :
- appliquer un promoteur d'adhérence sur au moins un tamis (6) ou au moins un filtre (12) et/ou au moins une couche porteuse (4), avant de produire la liaison (8) en matériaux élastomères et/ou d'appliquer le revêtement (9) en élastomère sur au moins une couche porteuse (4).

11. Procédé selon un des revendications 8 à 10, comprenant en outre de :
- appliquer un gradin continu (10) ou une nervure continue sur ou dans le revêtement (9) en élastomères d'au moins une couche porteuse (4).

12. Procédé selon la revendication 11, **caractérisé en ce qu'**au moins un gradin continu (10) ou une nervure continue avec une section transversale généralement triangulaire est formée, dont la hauteur est comprise entre 0,005 et 2,5 mm et de préférence entre 0,01 et 0,5 mm.
